# EUROPÄISCHE PATENTSCHRIFT

(11) **EP 1 360 224 B1**
(45) Veröffentlichungstag und Bekanntmachung des Hinweises auf die Patenterteilung: **07.07.2004**
(21) Anmeldenummer: 02710796.0
(22) Anmeldetag: 15.01.2002
(51) Int. Cl.: C08J 3/22, C09B 67/00, C08F 220/18

(54) **PULVERFÖRMIGE PIGMENTPRÄPARATIONEN ZUR EINFÄRBUNG VON FOLIEN**
POWDERY PIGMENT PREPARATIONS FOR DYEING FILMS
PREPARATIONS PULVERULENTES POUR TEINTER DES FILMS

(30) Priorität: 18.01.2001 DE 10102019
(43) Veröffentlichungstag der Anmeldung: 12.11.2003
(73) Patentinhaber: Clariant GmbH, 65929 Frankfurt am Main (DE)
(72) Erfinder: BALENT, Robert, 65929 Frankfurt am Main (DE); BECK, Dietmar, 65929 Frankfurt (DE); OHLEIER, Heinfred, 65451 Kelsterbach (DE)
(74) Vertreter: Hütter, Klaus, Dr.
(86) Internationale Anmeldenummer: PCT/EP2002/000310
(87) Internationale Veröffentlichungsnummer: WO 2002/057341

(56) Entgegenhaltungen:
- EP-A- 0 718 327
- DE-C- 4 427 931
- US-A- 3 764 587

## Beschreibung

Die Erfindung betrifft pulverförmige Pigmentpräparationen, die insbesondere zum Einfärben von Folien aus Polymethylmethacrylat (PMMA) geeignet sind.

In der EP-A-0 718 327 werden Poly(meth)acrylat-Copolymere beschrieben, die als Pigmentdispergatoren in Kunststoffmassen zur Herstellung von extrudierten Formkörpern verwendet werden.

Die US-A-4,948,546 beschreibt ein Verfahren zur Herstellung von flexiblen Platten aus PMMA, die mit anorganischen Pigmenten eingefärbt sind. In diesem Verfahren werden die Pigmente als flüssige oder siruspöse Dispersionen in bestimmten Acryl-Copolymeren eingesetzt.

Die Einfärbung von dünnen Folien aus PMMA stellt den Fachmann vor besondere Probleme, da übliche Pigmentpräparationen bewirken oder nicht verhindern können, dass es zur Versprödung der Folie kommt oder Stippen in der eingefärbten Folie entstehen.

Aufgabe der vorliegenden Erfindung war es, pulverförmige Pigmentpräparationen zu finden, die in der Lage sind, Dünnfolien aus PMMA einzufärben, ohne das der entstehende Film Stippen oder Löcher aufweist.

Es wurde gefunden, dass nachstehende Pigmentpräparation, die ein Acrylharz einer bestimmten Zusammensetzung enthält, überraschenderweise die gestellte Aufgabe löst.

Gegenstand der vorliegenden Erfindung ist eine pulverförmige Pigmentpräparation, enthaltend ein in einem Acrylatharz dispergiertes organisches oder anorganisches Pigment, dadurch gekennzeichnet, dass das Acrylatharz eine mittlere Molmasse Mw zwischen 40000 und 80000 g/mol, vorzugsweise 50000 und 70000 g/mol, insbesondere 55000 bis 65000 g/mol, hat und ein Copolymer aus 50 bis 65 Mol-% Ethylmethacrylat, 30 bis 45 Mol-% Butylmethacrylat und 0,5 bis 5 Mol-% Methacrylsäure ist.

Bevorzugt im Sinne der vorliegenden Erfindung sind Acrylatharze mit einem Gehalt von 55 bis 60 Mol-%, insbesondere 57 bis 59 Mol-%, an Ethylmethacrylat, 35 bis 40 Mol-%, insbesondere 37 bis 39 Mol-%, an Butylmethacrylat und 1 bis 5 Mol-%, insbesondere 2 bis 4 Mol-%, Methacrylsäure.

Als Butylmethacrylat wird vorzugsweise n- oder iso-Butylmethacrylat verwendet. Besonders bevorzugt ist n-Butylmethacrylat.

Als organische Pigmente kommen insbesondere Monoazo-, Disazo-, und verlackte Azopigmente, Azokondensations-Pigmente, Benzimidazolon-, Naphtol-, lsoindolinon-, Isoindolin-, Phthalocyanin-, Chinacridon-, Anthanthron-, Perylen-, Perinon-, Thioindigo-, Thiazinindigo-, Chinophthalon-, Dioxazin-,
Diketopyrrolopyrrol-Pigment und Ruß in Betracht.
Beispiele sind C.l. Pigment Brown 25, 41, P.Violet 19, P.Y. 17, 110, P.R. 101, 185, 254, P.Blue 15:1, 15:3, P.Green 7.
Als anorganische Pigmente kommen insbesondere Nickeltitanate, Chromtitanate, Eisenoxide, Ultramarin, Chromoxid, und Titandioxid in Betracht.

Das Gewichtsverhältnis zwischen dem Pigment und dem Acrylatharz beträgt vorzugsweise 70:30 bis 30:70, insbesondere 55:45 bis 45:55.

Bevorzugt sind pulverförmige Pigmentpräparationen, bestehend im wesentlichen aus
a) 30 bis 70 Gew.-%, vorzugsweise 45 bis 55 Gew.-%, eines Pigments;
b) 70 bis 30 Gew.-%, vorzugsweise 55 bis 45 Gew.-%, des besagten Acrylatharzes;
c) 0 bis 8 Gew.-%, vorzugsweise 2 bis 4 Gew.-%, eines Gleitmittels, und
d) 0 bis 10 Gew.-%, vorzugsweise 0 bis 1 Gew.-%, weiterer üblicher Zusatzstoffe, wobei die Summe aller Komponenten 100 Gew.-% ergibt.

Die Herstellung des erfindungsgemäß eingesetzten Acrylatharzes kann nach üblichen Methoden erfolgen, z.B. durch dem Fachmann bekannte Verfahren der Lösungs- oder Emulsionspolymerisation.

Als Komponente c) kommen Gleitmittel, wie z.B. epoxidierte Sojaöle, Fettalkoholethoxylate und Fettsäureester in Betracht.

Als Komponente d) kommen beispielsweise Netzmittel, Entstaubungsmittel, Antischaummittel und Antibackmittel in Betracht.

Die Herstellung der erfindungsgemäßen Pigmentpräparationen kann erfolgen, indem man das Pigment in dem Acrylatharz dispergiert, die Mischung bei 100 bis 160°C, bevorzugt 100 bis 150°C, insbesondere 100 bis 140°C plastifiziert und die plastische Masse zerkleinert.
Vorzugsweise wird das Pigment, zweckmäßigerweise in Pulverform, in das Acrylatharz oder in eine Mischung der Komponenten b), c) und/oder d) eindispergiert, und das Gemisch durch Einleiten von Wasserdampf einer Temperatur von 100 bis 160°C, bevorzugt 100 bis 150°C, plastifiziert. Das Eindispergieren erfolgt üblicherweise mit einem Dispersionskneter. Während und nach dem Einleiten von Wasserdampf wird das Gemisch zweckmäßigerweise geknetet. Anschließend wird, vorzugsweise unter Zugabe von etwas Wasser, auf eine Temperatur von 60 bis 80°C abgekühlt, um die plastifizierte Masse zu zerkleinern. Dann wird die spröde Masse im Kneter gebrochen und in einer mechanischen Mühle gemahlen. Es kann auch so verfahren werden, dass die Komponenten b), c) und/oder d) zunächst gemischt werden, dann wie beschrieben durch Einleiten von Wasserdampf plastifiziert wird und in die plastische Masse das Pigment eingeknetet wird.

Die Knetdauer beträgt zweckmäßigerweise 10 bis 60 Minuten. Die Teilchengröße nach der Mahlung beträgt im allgemeinen 100 bis 200 µm. Die erfindungsgemäße Pigmentpräparation ist rieselfähig, nicht staubend und gut dosierbar.

Die erfindungsgemäßen Pigmentpräparationen sind als Farbmittel zum Einfärben von hochmolekularen Massen, wie z.B. Kunststoffe, Lacke und Druckfarben geeignet. Besonders vorteilhaft werden sie zum Einfärben von PMMA eingesetzt, insbesondere zum Einfärben von PMMA-Folien. Dies kann geschehen, indem die Pigmentpräparation in thermoplastisches PMMA eingearbeitet wird, so dass ein Compound mit einer Pigmentkonzentration beispielsweise zwischen 0,5 und 8 Gew.-%, bezogen auf das Gesamtgewicht des Compounds, entsteht. Die Einarbeitung kann mit herkömmlichen Knetapparaturen oder Extrudern und vorzugsweise bei Temperaturen zwischen 180 und 220°C erfolgen.

Der so hergestellte Compound kann für weitere Verarbeitungsschritte, z.B. Folienherstellung, eingesetzt werden. Folien können beispielsweise hergestellt werden, indem die erfindungsgemäße Pigmentpräparation zusammen mit PMMA-Trägermaterial, oder in Form des besagten Compounds auf einer oder mehreren Plastifiziereinheiten aufgeschmolzen, z.B. bei 190 bis 220°C, und mittels eines nachgeschalteten Werkzeugs in Folienform gebracht wird. Als Plastifiziereinheiten kommen vorzugsweise Extruder oder Kneter in Betracht.
Als Extrusionsanlagen können Mono- oder Coextrusionsanlagen sowie Kalander eingesetzt werden. Abhängig von den einzelnen Foliendicken, z.B. von 5 bis 1000 µm, bevorzugt 80 bis 120 µm, werden unterschiedliche Düsen/Kalanderspalten verwendet. Bevorzugte Einsatzbereiche der erfindungsgemäßen Folien sind Kaschierfolien.

Ein besonderer Vorteil der erfindungsgemäßen Pigmentpräparationen besteht darin, dass an Pigment hochkonzentrierte PMMA-Compounds bereitgestellt werden können, die direkt zu dünnen Folien, die frei von Stippen und Löchern sind, verarbeitbar sind.

Die erfindungsgemäß hergestellten Pigmentpräparationen sind auch geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmentpräparationen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmentpräparationen als Farbmittel in Ink-Jet Tinten auf wässriger und nichtwässriger Basis sowie in solchen Tinten, die nach dem Hot-melt-Verfahren arbeiten, sowie für "electronic inks" geeignet.

Darüber hinaus sind die erfindungsgemäß hergestellten Pigmentpräparationen auch als Farbmittel für Farbfilter, sowohl für die subtraktive als auch für die additive Farberzeugung, geeignet.

Die Erfindung wird durch nachfolgende Beispiele erläutert. Teile bedeuten Gewichtsteile.

### Beispiel 1

In einem Dispersionskneter werden 225 Teile Acrylatharz (bestehend aus 58 Mol-% Ethylmethacrylat, 39 Mol-% n-Butylmethacrylat und 3 Mol-% Methacrylsäure; Molmasse 59000 g/mol) und 9 Teile epoxidiertes Sojaöl bei Raumtemperatur gemischt. Anschließend wird Wasserdampf (130°C) eingeleitet und die Masse plastifiziert. In die plastische Masse werden 225 Teile C.I. Pigment Blue 15:1 portionsweise innerhalb von 15 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Beispiel 2

In einem Dispersionskneter werden 225 Teile Acrylatharz (bestehend aus 60 Mol-% Ethylmethacrylat, 38 Mol-% n-Butylmethacrylat und 2 Mol-% Methacrylsäure; Molmasse 60000 g/mol) und 9 Teile epoxidiertes Sojaöl bei Raumtemperatur gemischt. Anschließend wird Wasserdampf (130°C) eingeleitet und die Masse plastifiziert. In die plastische Masse werden 225 Teile C.I. Pigment Violett 19 portionsweise innerhalb von 15 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Beispiel 3

In einem Dispersionskneter werden 225 Teile Acrylatharz (bestehend aus 56 Mol-% Ethylmethacrylat, 40 Mol-% n-Butylmethacrylat und 4 Mol-% Methacrylsäure; Molmasse 60000 g/mol) und 9 Teile-Fettalkoholethoxylat bei Raumtemperatur gemischt. Anschließend wird Wasserdampf (130°C) eingeleitet und die Masse plastifiziert. In die plastische Masse werden 225 Teile C.l. Pigment Red 254 portionsweise innerhalb von 20 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Beispiel 4

In einem Dispersionskneter werden 225 Teile Acrylatharz (bestehend aus 58 Mol-% Ethylmethacrylat, 39 Mol-% n-Butylmethacrylat und 3 Mol-% Methacrylsäure; Molmasse 59000 g/mol) und 18 Teile epoxidiertes Sojaöl bei Raumtemperatur gemischt. Anschließend wird Wasserdampf (130°C) eingeleitet und die Masse plastifiziert. In die plastische Masse werden 225 Teile C.l. Pigment Yellow 17 portionsweise innerhalb von 20 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Beispiel 5

In einem Dispersionskneter werden 225 Teile Acrylatharz (bestehend aus 57 Mol-% Ethylmethacrylat, 40 Mol-% n-Butylmethacrylat und 3 Mol-% Methacrylsäure; Molmasse 59000 g/mol) und 18 Teile Fettalkoholethoxylat bei Raumtemperatur gemischt. Anschließend wird Wasserdampf (130°C) eingeleitet und die Masse plastifiziert. In die plastische Masse werden 225 Teile C.l. Pigment Red 185 portionsweise innerhalb von 22 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Beispiel 6

In einem Dispersionskneter werden 225 Teile Acrylatharz (bestehend aus 58 Mol-% Ethylmethacrylat, 39 Mol-% n-Butylmethacrylat und 3 Mol-% Methacrylsäure; Molmasse 59000 g/mol) und 18 Teile epoxidiertes Sojaöl bei Raumtemperatur gemischt. Anschließend wird Wasserdampf (130°C) eingeleitet und die Masse plastifiziert. In die plastische Masse werden 225 Teile C.l. Pigment Red 101 portionsweise innerhalb von 20 Minuten eingeknetet und bei 110°C weitere 30 Minuten geknetet. Dann wird die Masse unter Zugabe von etwas Wasser zerkleinert, der Kneter ausgeschaltet und die spröde Masse nach dem Abkühlen im Kneter gebrochen. Anschließend wird in einer mechanischen Mühle gemahlen. Es entsteht eine pulverförmige Pigmentpräparation.

### Anwendungsbeispiel:

In einem diskontinuierlichen Mischvorgang werden Polymethylmethacrylat (PMMA), Additive, wie z.B. Gleitmittel, Adhäsionsverminderer, Hitzestabilisatoren und Weichmacher, und eine pulverförmige Pigmentpräparation aus den Beispielen 1 bis 6 gemischt, bis eine homogene Mischung entsteht. Das so entstandene Compound wird in einem Planetwalzenextruder unter Druck und Temperatur gefördert und aufgeschmolzen.

Bei diesem Vorgang werden die erfindungsgemäßen Pigmentpräparationen ebenfalls aufgeschmolzen und in dem plastifizierten Material optimal verteilt, so dass es zu einer homogenen Einfärbung kommt.

Das plastifizierte und eingefärbte Material wird durch das Werkzeug des Planetwalzenextruders auf ein Förderband extrudiert und gelangt so auf die Kalanderwalzen, wo es zunächst im Spalt zweier gleichläufig drehender und beheizter Metallwalzen weiter aufgeschmolzen wird.

Weitere nachgeschaltete Walzen sorgen für zusätzliche Homogenisierung und entsprechende-Dickeneinstellung des flächigen Endproduktes.

Auf diese Weise werden eingefärbte PMMA-Folien, welche frei von Stippen und Löchern sind, erhalten.

## Patentansprüche

1. Pulverförmige Pigmentpräpäration, enthaltend ein in einem Acrylatharz dispergiertes Pigment, **dadurch gekennzeichnet, dass** das Acrylatharz eine mittlere Molmasse Mw zwischen 40000 und 80000 g/mol hat und ein Copolymer aus 50 bis 65 Mol-% Ethylmethacrylat, 30 bis 45 Mol-% Butylmethacrylat und 0,5 bis 5 Mol-% Methacrylsäure ist.

2. Pigmentpräparation nach Anspruch 1, **dadurch gekennzeichnet, dass** das Acrylatharz eine mittlere Molmasse Mw zwischen 50000 und 70000 g/mol hat.

3. Pigmentpräparation nach Anspruch 1 oder 2, **dadurch gekennzeichnet, dass** das Acrylatharz zu 55 bis 60 Mol-% aus Ethylmethacrylat, zu 35 bis 40 Mol-% aus Butylmethacrylat und zu 1 bis 5 Mol-% aus Methacrylsäure besteht.

4. Pigmentpräparation nach mindestens einem der Ansprüche 1 bis 3, **dadurch gekennzeichnet, dass** das Butylmethacrylat n-Butylmethacrylat ist.

5. Pigmentpräparation nach mindestens einem der Ansprüche 1 bis 4, **dadurch gekennzeichnet, dass** das Gewichtsverhältnis zwischen dem Pigment und dem Acrylatharz 70:30 bis 30:70 ist.

6. Pigmentpräparation nach mindestens einem der Ansprüche 1 bis 5, **dadurch gekennzeichnet, dass** das Pigment ein Monoazo-, Disazo-, verlacktes Azopigment, Azokondensationspigment, Benzimidazolon-, Naphthol-, Isoindolinon-, Isoindolin-, Phthalocyanin-, Chinacridon-, Anthanthron-, Perylen-, Perinon-, Thioindigo-, Thiazinindigo-, Chinophthalon-, Dioxazin-, Diketopyrrolopyrrol-Pigment oder Ruß ist.

7. Pigmentpräparation nach mindestens einem der Ansprüche 1 bis 5, **dadurch gekennzeichnet, dass** das Pigment ein Nickeltitanat, Chromtitanat, Eisenoxid, Ultramarin, Chromoxid oder Titandioxid ist.

8. Pigmentpräparation nach mindestens einem der Ansprüche 1 bis 7, bestehend aus
a) 30 bis 70 Gew.-%, vorzugsweise 45 bis 55 Gew.-%, eines Pigments;
b) 70 bis 30 Gew.-%, vorzugsweise 55 bis 45 Gew.-%, des Acrylatharzes;
c) 0 bis 8 Gew.-%, vorzugsweise 2 bis 4 Gew.-%, eines Gleitmittels, und
d) 0 bis 10 Gew.-%, vorzugsweise 0 bis 1 Gew.-%, weiterer üblicher Zusatzstoffe,
wobei die Summe aller Komponenten 100 Gew.-% ergibt.

9. Verfahren zur Herstellung einer Pigmentpräparation nach einem oder mehreren der Ansprüche 1 bis 8, **dadurch gekennzeichnet, dass** man das Pigment in dem Acrylatharz dispergiert, die Mischung bei 100 bis 160°C plastifiziert und die plastische Masse zerkleinert.

10. Verwendung einer Pigmentpräparation nach einem oder mehreren der Ansprüche 1 bis 8 zum Einfärben von Kunststoffen, insbesondere Polymethylmethacrylat, Lacken, Druckfarben, elektrophotographischen Tonern und Pulverlacken.

11. Verwendung nach Anspruch 10 zum Einfärben von Folien, insbesondere aus Polymethylmethacrylat.

## Claims

1. A powderous pigment preparation comprising a pigment in dispersion in an acrylate resin, wherein the acrylate resin has an average molar mass Mw of between 40 000 and 80 000 g/mol and is a copolymer of from 50 to 65 mol% ethyl methacrylate, from 30 to 45 mol% butyl methacrylate, and from 0.5 to 5 mol% methacrylic acid.

2. A pigment preparation as claimed in claim 1, wherein the acrylate resin has an average molar mass Mw between 50 000 and 70 000 g/mol.

3. A pigment preparation as claimed in claim 1 or 2, wherein the acrylate resin is composed of from 55 to 60 mol% ethyl methacrylate, from 35 to 40 mol% butyl methacrylate, and from 1 to 5 mol% methacrylic acid.

4. A pigment preparation as claimed in at least one of claims 1 to 3, wherein the butyl methacrylate is n-butyl methacrylate.

5. A pigment preparation as claimed in at least one of claims 1 to 4, wherein the weight ratio between the pigment and the acrylate resin is from 70:30 to 30:70.

6. A pigment preparation as claimed in at least one of claims 1 to 5, wherein the pigment is a monoazo, disazo, laked azo pigment, azo condensation pigment, benzimidazolone, naphthol, isoindolinone, isoindoline, phthalocyanine, quinacridone, anthanthrone, perylene, perinone, thioindigo, thiazineindigo, quinophthalone, dioxazine or diketopyrrolopyrrole pigment or carbon black.

7. A pigment preparation as claimed in at least one of claims 1 to 5, wherein the pigment is a nickel titanate, chromium titanate, iron oxide, ultramarine, chromium oxide or titanium dioxide.

8. A pigment preparation as claimed in at least one of claims 1 to 7, composed of
a) from 30 to 70% by weight, preferably from 45 to 55% by weight, of a pigment;
b) from 70 to 30% by weight, preferably from 55 to 45% by weight, of the acrylate resin,
c) from 0 to 8% by weight, preferably from 2 to 4% by weight, of a lubricant, and
d) from 0 to 10% by weight, preferably from 0 to 1% by weight, of further customary additives, the sum of all components being 100% by weight.

9. A process for producing a pigment preparation as claimed in one or more of claims 1 to 8, which comprises dispersing the pigment in the acrylate resin, plastifying the mixture at from 100 to 160°C, and comminuting the plastic mass.

10. The use of a pigment preparation as claimed in one or more of claims 1 to 8 to color plastics, especially polymethyl methacrylate, paints, printing inks, electrophotographic toners, and powder coating materials.

11. The use as claimed in claim 10 to color films, particularly of polymethyl methacrylate.

## Revendications

1. Préparation de pigment pulvérulente contenant un pigment dispersé dans une résine acrylate, **caractérisée en ce que** la résine acrylate a une masse molaire moyenne Mw entre 40 000 et 80 000 g/mol et est un copolymère constitué de 50 à 65% en mole de méthacrylate d'éthyle, de 30 à 45% en mole de méthacrylate de butyle et de 0,5 à 5 % en mole d'acide méthacrylique.

2. Préparation de pigment selon la revendication 1, **caractérisée en ce que** la résine acrylate a une masse molaire moyenne Mw entre 50 000 et 70 000 g/mol.

3. Préparation de pigment selon la revendication 1 ou 2, **caractérisée en ce que** la résine acrylate est constituée de 55 à 60 % en mole de méthacrylate d'éthyle, de 35 à 40 % en mole de méthacrylate de butyle et de 1 à 5 % en mole d'acide méthacrylique.

4. Préparation de pigment selon au moins l'une des revendications 1 à 3, **caractérisée en ce que** le méthacrylate de butyle est le méthacrylate de n-butyle.

5. Préparation de pigment selon au moins l'une des revendications 1 à 4, **caractérisée en ce que** le rapport en poids entre le pigment et la résine acrylate est de 70 : 30 à 30 : 70.

6. Préparation de pigment selon au moins l'une des revendications 1 à 5, **caractérisée en ce que** le pigment est un pigment monoazoïque, disazoïque, azoïque formé, un pigment de condensation azoïque, un pigment benzimidazolone, naphtol, iso-indolinone, isoindoline, phtalocyanine, quinacridone, anthanthrone, pérylène, périnone, thioindigo, thiazinindigo, quinophtalone, dioxazine, dicétopyrrolopyrrole ou de noir de carbone.

7. Préparation de pigment selon au moins l'une des revendications 1 à 5, **caractérisée en ce que** le pigment est un titanate de nickel, titanate de chrome, oxyde de fer, outremer, oxyde de chrome ou dioxyde de titane.

8. Préparation de pigment selon au moins l'une des revendications 1 à 7, constitué de
a) 30 à 70 % en poids, de préférence 45 à 55 % en poids d'un pigment ;
b) 70 à 30 % en poids, de préférence 55 à 45 % en poids de la résine acrylate ;
c) 0 à 8 % en poids, de préférence 2 à 4 % en poids, d'un agent lubrifiant, et
d) 0 à 10 % en poids, de préférence 0 à 1 % en poids, d'autres additifs usuels,
dans laquelle la somme de tous les composants est égale à 100 % en poids.

9. Procédé de préparation d'une préparation de pigment selon l'une ou plusieurs des revendications 1 à 8, **caractérisé en ce qu'**on disperse le pigment dans la résine acrylate, on plastifie le mélange de 100 à 160 °C et on broie la matière plastique.

10. Utilisation d'une préparation de pigment selon l'une ou plusieurs des revendications 1 à 8 pour teinter des matières plastiques, en particulier le polyméthacrylate de méthyle, les peintures, les colorants d'impression, les toners électrophotographiques et les peintures en poudre.

11. Utilisation selon la revendication 10 pour la teinture de feuilles, en particulier de polyméthacrylate de méthyle.
